# EUROPEAN PATENT SPECIFICATION

(11) **EP 2 958 706 B1**
(45) Date of publication and mention of the grant of the patent: **15.08.2018**
(21) Application number: 14707249.0
(22) Date of filing: 14.02.2014
(51) Int. Cl.: B23Q 1/54

(54) **MACHINE TOOL COMPRISING A MACHINING HEAD**
WERKZEUGMASCHINE MIT EINEM BEARBEITUNGSKOPF
MACHINE-OUTIL COMPRENANT TÊTE D'USINAGE

(30) Priority: 19.02.2013 IT TV20130019
(43) Date of publication of application: 30.12.2015
(73) Proprietor: Breton S.p.A., 31030 Castello di Godego (TV) (IT)
(72) Inventor: CORSI, Armando, I-29121 Piacenza (IT)
(74) Representative: Dragotti, Gianfranco
(86) International application number: PCT/IB2014/058995
(87) International publication number: WO 2014/128603

(56) References cited:
- WO-A1-02/32617
- JP-A- S5 669 002
- US-A1- 2004 134 050

## Description

The present invention relates to a machine tool according to the preamble of claim 1, as for example known from WO 02/32617 A1. In particular, the present invention relates to heads of the bi-rotational type, i.e. with two axes of rotation.

Bi-rotational heads may be of various types, for example forked heads, single-sided heads or tilting heads, depending on the arrangement of the movable bodies.

Forked heads are generally composed of a first fork-shaped body, suitable for being mounted on the bottom end of a sleeve of a machine tool, so as to be rotatable about a vertical axis, and a second body mounted rotatably between the fork and adapted to rotate about a horizontal axis.

Single-sided heads are similar to forked heads and differ essentially in that the fork consists of a single arm instead of two arms. In other words, the second body is mounted so as to project from the first body.

Tilting heads comprise a first body, to be mounted rotatably about a vertical axis on the bottom end of a sleeve of a machine tool, and a second body connected to the first body and adapted to rotate about an axis inclined with respect to the vertical. For this purpose, the mutually facing surfaces of the first and second body are inclined with respect to the vertical. The inclination may be for example 45°.

Examples of embodiments of these types of heads may be found in Italian patent IT 1384600 in the name of Tecniche Industriali S.r.l. and in Italian patent application TV2011A000164 in the name of the present Applicant.

In the machining heads described in these documents the power motor used to perform movement of the mandrel tool is mounted in the sleeve. The movement is then transferred from the sleeve to the mandrel by means of a relatively complex mechanical transmission consisting of mainly bevel-type gears.

In the prior art attempts have been made to simplify the design of this type of head by transferring the means directly onto the mandrel or alternatively onto the second body, namely onto the moving part of the machining head.

For example United States patent US 5,413,439 describes a machining head for machine tools comprising:
- a first body rotating about a vertical axis;
- a second body mounted rotatably on the first body, with its axis of rotation inclined at 45° with respect to the vertical axis;
- a mandrel mounted on the second body, where the machining axis is inclined at 45° with respect to the axis of rotation of the second body; and
- a motor mounted on the mandrel, coaxially with the axis of the mandrel.

Italian patent IT 1340914 in the name of Mandelli Sistemi describes two types of machining head, a forked head and a tilting head, where the mandrel motor is situated on the second body, namely on the movable part of the machining head.

As regards the first type, the power motor is positioned on the movable part of the machining head on which the mandrel is housed, so that its drive shaft is parallel to the shaft of the mandrel on which the tool is keyed. The movement between the two shafts is transmitted via cylindrical gears.

Similarly, in the second type, the associated motor is positioned in the movable part of the head where the mandrel is housed, so that the two axes are parallel. Transmission of the movement between the shafts is performed by means of a speed gearbox with cylindrical gears.

A similar machining head is also described in the German patent DE 19650284. The patent describes a head comprising a body rotating about an axis inclined at 45° and housing a mandrel and the associated drive motor, so that their shafts are parallel. The transmission between drive shaft and mandrel is achieved by means of a pair of pinions and a belt.

Although the solutions illustrated above simplify considerably the design of a bi-rotational head, they have a number of drawbacks and limitations.

In the case of United States patent US 5,413,439, where the motor is mounted on the mandrel and coaxially with its axis, satisfactory results are not obtained since the dimensions of the mandrel do not allow the installation of a power motor suitable for machining operations such rough-machining, but only less powerful motors suitable for finish-machining. Moreover, even if the dimensions of the mandrel were to be increased, precisely these dimensions would limit the movements of the mandrel, resulting in a consequent increase in the overall dimensions of the machining head and therefore of the machine tool.

As regards the solution proposed in Italian patent IT 1340914, in both types of head, the mandrel motor and the mandrel are contained inside a single body. In this type of head it is therefore not possible to replace the mandrel, without having to replace also the power motor. Moreover, it is also not possible to replace rapidly the mandrel operated by the power motor and designed to perform rough-machining operations, with an electric mandrel for performing finish-machining at a high cutting speed.

Secondly, coupling together of drive shaft and mandrel shaft is achieved by means of cylindrical gears which do not allow relative rotation of the drive shaft and the mandrel shaft, thus resulting in the structure of the machining head being very rigid and inflexible.

Similar drawbacks also exist in the German patent DE 19650284, where the movement is transferred between the motor shaft and the mandrel shaft by means of a belt transmission.

The object of the present invention is therefore to overcome the drawbacks of the prior art. This object is performed with a machine tool as defined in claim 1. A first task of the present invention is therefore to provide a bi-rotational head in which the transmission of the movement between the power motor and the mandrel shaft is simplified compared to conventional machining heads.

A second task of the present invention is to provide a machining head where the mandrel changing operation may be performed without having to change also the mandrel motor.

A further task of the present invention is to provide a machining head in which an electric mandrel may be used instead of a mechanical mandrel connected to a power motor.

Moreover it could be advantageous to be able to mount a mechanical mandrel with different angles of orientation with respect to the second body.

The idea which has occurred therefore is that of providing a machining head for a machine tool comprising:
a first body adapted to be connected to a sleeve of a machine tool, so as to be rotatable with respect thereto about a first axis of rotation;
a second body connected to the first body, so as to be rotatable with respect thereto about a second axis of rotation; and
a mandrel adapted to mount a tool and adapted to be fixed to the second body by means of fixing means provided on the second body and on the mandrel, wherein the mandrel defines a mandrel axis of rotation for the tool.

The machining head also comprises a motor provided with an output shaft, for rotation of the tool about the axis of rotation of the mandrel.

The machining head is characterized in that the axis of rotation of the output shaft of the motor coincides with the second axis of rotation of the second body.

The characteristic features and advantages of a machining head and a machine tool realized by applying the principles of the present invention will emerge more clearly from the description below of a number of examples of embodiment provided by way of a non-limiting example with reference to the accompanying drawings in which:
Fig. 1 shows a schematic cross-sectional view of an embodiment of a machining head according to the present invention;
Fig. 2 shows a schematic cross-sectional view of a second embodiment of a head according to the present invention;
Fig. 3 shows a schematic cross-sectional view of the embodiment according to Fig. 2 with an electric mandrel mounted;
Fig. 4 shows a schematic view of a machine comprising the machining head according to Fig. 2; and
Fig. 5 shows a schematic view of a machine comprising the machining head according to Fig. 1.

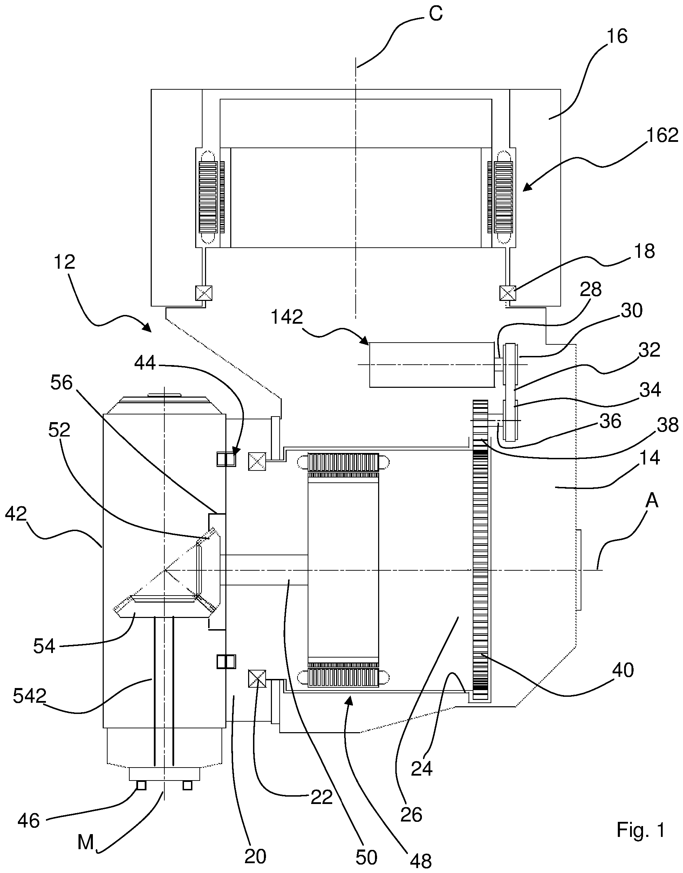

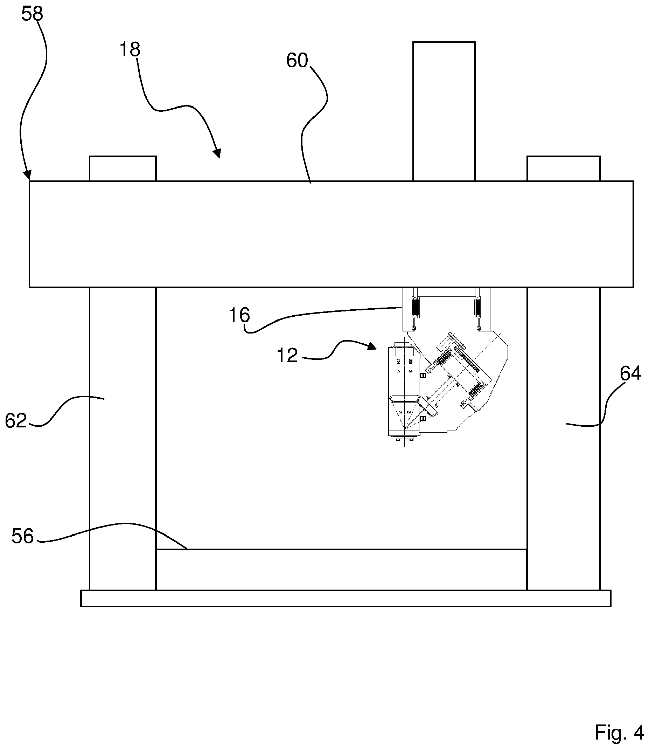

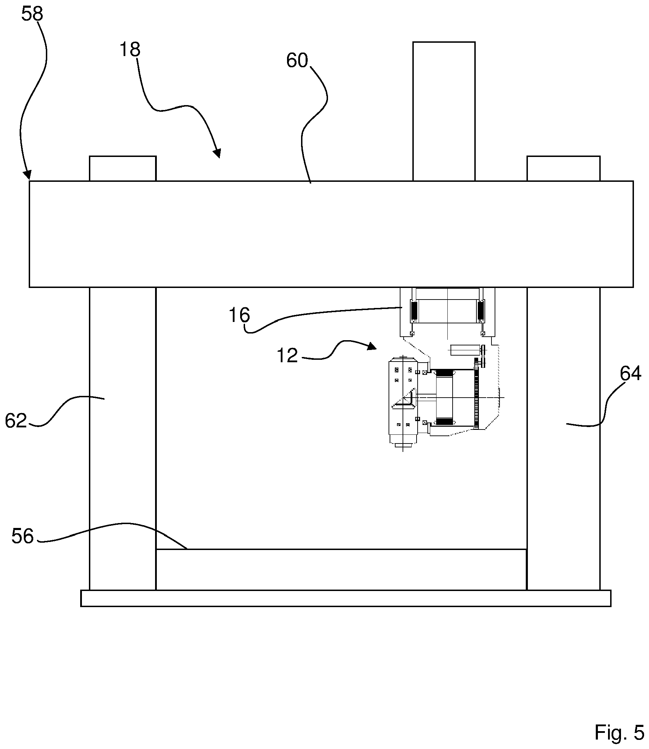

Figures 1, 2 and 3 show a machining head 12 comprising a first body 14 adapted to be fixed to the bottom end of a sleeve 16 of a machine tool 18 (shown in Figures 4 and 5).

The first body 14 is adapted to rotate about a first axis of rotation C.

Rotation of the first body 14 about the first axis C may be obtained by first motor means 162, positioned in a manner known per se between the sleeve 16 and first body 14. Advantageously the first motor means 162 may be a high-torque electric motor (also known as a torque motor or direct drive motor) where the stator is connected to the sleeve 16 and the rotor is connected to the first body 14.

In accordance with an alternative embodiment, not shown in the accompanying figures, the first motor means 162 may be positioned inside the sleeve 16 and may transmit the rotational movement to the first body 14 in a manner known per se via a belt or gear transmission.

As can be clearly seen in Figures 1, 2, and 3 the first body 14 may be partially inserted inside the sleeve 16 and mounted on the latter for example by means of a bearing 19.

The machining head 12 further comprises a second body 20, mounted on the first body 14, so as to be able to rotate about a second axis of rotation A, which is inclined with respect to the first axis C.

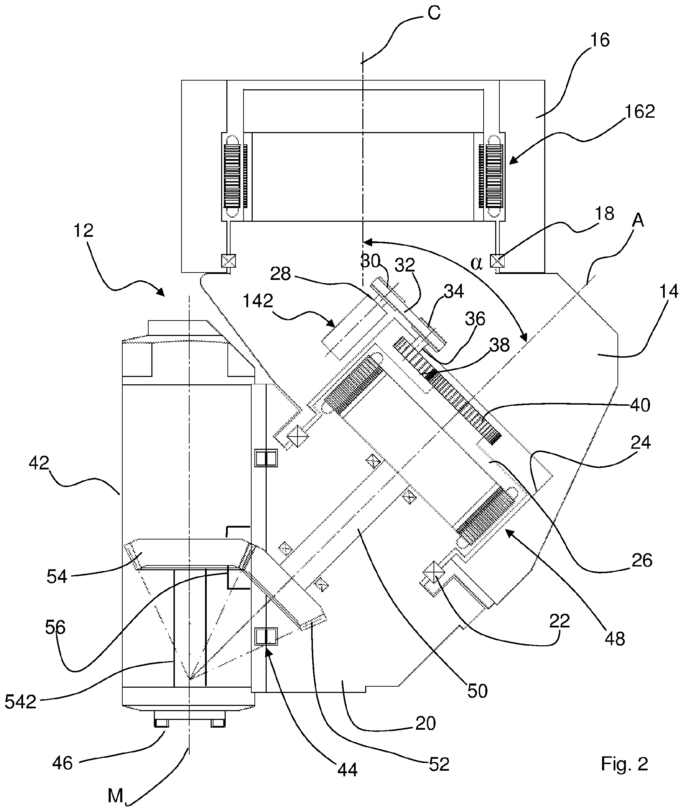

In accordance with a possible embodiment, which can be seen in Figures 1 and 2, the second body 20 may be partially inside the first body 14 and mounted on the latter by means of a bearing 22. Advantageously the first body 14 may be provided with a seat 24 adapted to receive one end 26 of the second body 20.

In accordance with a possible embodiment of the present invention, which can be seen clearly in Figure 1, the second axis A may be inclined at 90° with respect to the first axis C.

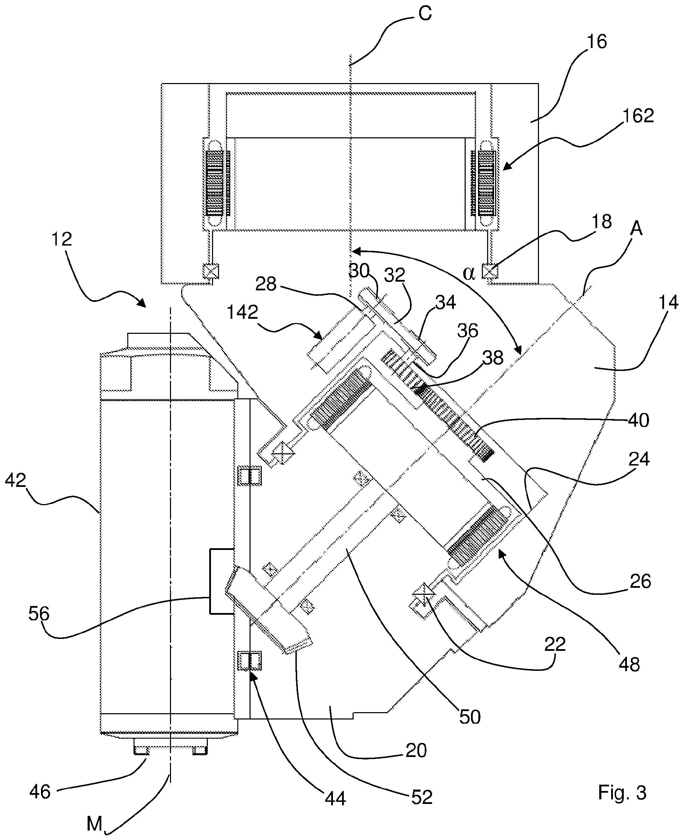

In accordance with an alternative embodiment, shown in Figure 2, the second axis A may be inclined with respect to the first axis C at an angle (indicated by α in Figure 2 and Figure 3) smaller than 90°. Advantageously, the second axis A may be inclined at an angle α equal to or in the region of 45° with respect to the first axis C.

Advantageously, the machining head 12 may comprise second motor means 142 for rotation, with respect to the first body 14, of the second body 20 about the axis A. Advantageously, said second motor means 142 may be provided on said first body 14.

In accordance with a possible embodiment of the present invention, shown in Figures 1-3, the second motor means 142 may comprise an electric motor provided with an output shaft 28 on which a first pulley 30 is keyed. The first pulley 30 is connected by means of a drive belt 32 to a second pulley 34 provided on a first end of a second shaft 36. The second end of the shaft 36 may be provided with a first gear wheel 38 suitable for meshing with a second gear wheel 40 provided on the end 26 of the second body 20. As will now be clear to the person skilled in the art, operation of the motor means 142 causes rotation of the second body 20 about the axis of rotation A, with respect to the first body 14.

From the above description the person skilled in the art will be able to easily understand the absolute and relative movements of the first body 14 and the second body 20:
- by operating the first motor means 162 it is possible to rotate the assembly comprising the first body 14 and the second body 20 about the first axis C; and
- by operating the second motor means 142, it is possible to cause rotation of the second body 20 about the second axis A, which is inclined with respect to the first axis C.

The machining head 12 according to the present invention further comprises a mandrel 42 adapted to mount one or more types of interchangeable tools (not shown) and adapted to be fixed to the second body 20 by means of fixing means 44 provided on the second body 20 and on the mandrel 42 itself, so as to move together therewith. The mandrel 42 defines in a manner known per se an axis of rotation M of the mandrel on which the tool rotates about itself.

In accordance with a possible embodiment of the present invention, shown in Figure 1, the mandrel axis of rotation M is perpendicular to the second axis of rotation A of the second body 20.

In accordance with an alternative embodiment, shown in Figure 2, the mandrel axis of rotation M is arranged at 45° with respect to the second axis A of the second body 20.

In accordance with a possible embodiment of the present invention, the fixing means 44 may be a reversible locking system, known per se to the person skilled in the art. Advantageously, the reversible locking system may be a five-point locking system.

The precision of coupling between mandrel 42 and second body 20 may be ensured for example by means of a Hirth joint comprising two sets of teeth provided on the facing surfaces of the mandrel 42 and the second body 20.

The mandrel 42 may be of the mechanical type (shown in Figures 1 and 2) or an electric mandrel (as shown in Figure 3).

In the case of an electric mandrel, such a mandrel is provided with its own motor means (not shown in that known per se) suitable for powering rotation of the tool.

In the case of a mechanical mandrel such a mandrel does not have its own motor means, but has means suitable for receiving the movement from a motor 48 provided with an output shaft 50 and situated on the machining head 12.

Advantageously the axis of rotation of the output shaft 50 coincides with the second axis of rotation A of the second body 20.

In accordance with a first embodiment of the present invention (not shown in the accompanying figures), the motor 48 is provided on the first body 14 and moves integrally with the latter. Advantageously the output shaft 50 of the motor 48 passes through the second body 20 which will consequently be provided with a through-seat. In this case also, the second axis A of the second body 20 coincides with the axis of the output shaft 50 of the motor 48.

Preferably the motor 48 is provided on the second body 20, as shown in Figures 1-3. In this case also the second axis A of the second body 20 coincides with the axis of the output shaft 50 of the motor 48.

In accordance with a possible embodiment of the present invention, the rated data of the motor may be: output power 60 kW, 1,500 Nm and 0 to 4,000 rpm.

In accordance with a possible embodiment, between the output shaft 50 and the mandrel, bevel gears are provided for transmission of the movement from the motor 48 to the shaft of the mandrel 42 on which the tool is fixed.

Advantageously, a bevel gearwheel 52 is keyed onto the end of the output shaft 50.

As shown in the accompanying figures, the mandrel 42 may be provided with a seat 56 inside which the bevel gear wheel 52 may be at least partially inserted.

As shown in the embodiments of Figures 1 and 2, the bevel gear wheel 52 may mesh with a driven bevel gear wheel 54 provided on the mechanical mandrel 42. The driven bevel gear wheel 54 is connected to means for means for transmission of the movement to the tool of the mandrel 42. These means may be, for example, a driven shaft 542 and a fixing system 46 for the machining tool.

In accordance with a possible embodiment of the present invention, the bevel gear wheel 52 and the driven bevel gear wheel 54 have ground helical teeth.

In the embodiment shown in Figure 3 in which the mandrel 42 is an electric mandrel, said mandrel does not have an element for coupling with the bevel gear wheel 52 of the output shaft 50 of the motor 48, so that the motor 48 is in this case deactivated.

An example of the rated data of the electric mandrel may be: 40 Kw, 20,000 rpm and 100 Nm.

It is therefore clear to the person skilled in the art that it is possible to mount on the second body 20:
- a high-torque mechanical mandrel for heavy or improved machining operations for the removal of large amounts of hard material (e.g. rough-machining) where high torques with a relative low number of revolutions are required; or
- an electric mandrel for finishing operations or the machining of light alloys where relatively low torques and a high number of revolutions are required.

Advantageously, as a result of the bevel gear transmission 52, 54, the mandrel axis M and the second axis A may be inclined with respect to each other, allowing mutually relative rotation. In fact, the mechanical mandrel 42 may be advantageously mounted at different angles of orientation with respect to it surface for coupling with the second body 20. In other words, as a result of the present invention, in the case of the mechanical mandrel, coupling between mandrel and second body may occur in a plurality of positions in which the axis of the mandrel M is rotated with respect to the second axis A of the second body 20. In fact, owing to the use of bevel gears, the driven bevel gear wheel 54 may mesh with the bevel gear wheel 52 of the output shaft 50 in several positions.

As mentioned above, the motor 48 is mounted fixed inside the machining head 12 with its axis of rotation coinciding with the axis of rotation of the second body 20, and therefore when replacing a mechanical mandrel with an electric mandrel, the motor may be retained inside the machining head 12 even if not used.

Advantageously, it is also possible to obtain variable ranges of the speed of rotation of the tool-carrying mandrel, by modifying for example the number of teeth of the driven bevel gear wheel 54. It is therefore possible to effect a change of speed of the tool-carrying mandrel by simply replacing the mechanical mandrel 42.

With reference to Figures 4 and 5, a possible embodiment of a machine according to the present invention will be described.

The machine 18 comprises a work surface 56 on which the parts being machined may be positioned. The machine may comprise a gantry structure 58 suitable for supporting the machining head 12 described above.

In accordance with a possible embodiment of the present invention, the gantry structure 58 may comprise a beam 60 supported by two columns 62, 64. Advantageously the gantry structure 58 may be displaced in a direction perpendicular to the beam and parallel to the work surface 56

The sleeve 16 to which the machining head 12 is connected is provided on the beam 60. The beam 60 may be of the known type and in particular is provided with known means for moving the machining head 12 in a direction parallel to the lie of the work surface 56.

In accordance with alternative embodiments of the present invention, the machining head 12 may be mounted for example on an anthropomorphic arm or on any other type of structure which the person skilled in the art may easily imagine is suitable for the predefined objects. For example machines with a movable work surface or upright structures comprising a single column and provided with a horizontal sleeve.

The advantages which can be achieved with the machining head and with a machine comprising a machining head according to the present invention are therefore evident.

A bi-rotational head in which the transmission of the movement between the power motor and the mandrel shaft is simplified compared to conventional machining heads has therefore been provided.

The overall efficiency of the machining head is increased since the transmission of the movement to the tool of the mechanical mandrel is simplified.

A machining head in which it is possible to perform the mandrel changing operation without the need to remove also the mandrel motor is provided.

It may also be easily understood by the person skilled in the art that changing of the mandrel (from a mechanical mandrel to an electric mandrel or vice versa) is facilitated since the power motor is provided in the machining head 12 with its axis coinciding with the axis of rotation of the second body 20.

It is also evident that the range of speeds of rotation of the tool may be easily modified by modifying the number of teeth on the driven bevel gear wheel.

A person skilled in the art, in order to satisfy specific requirements, may make modifications to the embodiments described above and/or replaces parts described with equivalent parts, without thereby departing from the scope of the accompanying claims.

## Claims

1. Machine tool (18) comprising a sleeve (16) and a machining head (12), said machining head comprising:
a first body (14) connected to the sleeve (16), so as to be rotatable with respect thereto about a first axis of rotation (C);
a second body (20) connected to said first body (14), so as to be rotatable with respect thereto about a second axis of rotation (A) which is inclined with respect to the first axis (C);
a mandrel (42) adapted to mount a tool and adapted to be fixed to the second body (20) by means of fixing means (44) provided on the second body (20) and on the mandrel (42), said mandrel (42) defining a mandrel axis of rotation (M) for the tool; and
a motor (48) provided with an output shaft (50) and adapted to cooperate with said mandrel (42) for rotation of the tool about the mandrel axis of rotation (M);
said machine being **characterized in that** the axis of rotation of said output shaft (50) of said motor (48) coincides with the second axis of rotation (A) of the second body (20) and **in that** said mandrel is a mechanical mandrel (42) comprising a driven bevel gear wheel (54) adapted to engage with a bevel gear wheel (52) of the output shaft (50) for transmitting the movement to a tool-carrying tool shaft (542) of the mandrel (42), and the motor (48) is provided on the second body (20).

2. Machine tool (18) according to claim 1, **characterized in that** said first axis of rotation (C) and said second axis of rotation (A) are perpendicular to each other.

3. Machine tool (18) according to claim 2, **characterized in that** the mandrel axis of rotation (M) is perpendicular to the second axis of rotation (A).

4. Machine tool (18) according to claim 1, **characterized in that** said first axis of rotation (C) is inclined of an angle equal to or in the region of 45°.

5. Machine tool (18) according to claim 4, **characterized in that** the mandrel axis of rotation (M) is inclined at an angle equal to or in the region of 45°.

6. Machine tool (18) according to the preceding claim, **characterized in that** the bevel gear wheel (52) and the driven bevel gear wheel (54) have ground helical teeth.

7. Machine tool (18) according to claim 1, **characterized in that** said driven bevel gear wheel (54) is connected to means for transmission of movement to the tool of the madrel, these means being a driven shaft (542) and a fixing system (46) for the tool.

## Patentansprüche

1. Werkzeugmaschine (18), aufweisend eine Hülse (16) und einen Bearbeitungskopf (12), wobei der Bearbeitungskopf folgendes aufweist:
einen ersten Körper (14), der mit der Hülse (16) so verbunden ist, dass er in Bezug auf diese um eine erste Rotationsachse (C) drehbar ist;
einen zweiten Körper (20), der mit dem ersten Körper (14) so verbunden ist, dass er in Bezug auf diesen um eine zweite Rotationsachse (A), die in Bezug auf die erste Achse (C) geneigt ist, drehbar ist;
einen Spanndorn (42) zur Aufnahme eines Werkzeug, dazu eingerichtet, durch ein Befestigungsmittel (44), das an dem zweiten Körper (20) und dem Spanndorn (42) vorgesehen ist, an dem zweiten Körper (20) fixiert zu werden, wobei der Spanndorn (42) eine Spanndornrotationsachse (M) für das Werkzeug definiert; und
einen Motor (48), ausgestattet mit einer Abtriebswelle (50) und dazu eingerichtet, mit dem Spanndorn (42) zur Rotation des Werkzeugs um die Spanndornrotationsachse (M) zusammenzuwirken;
wobei die Maschine **dadurch gekennzeichnet ist, dass** die Rotationsachse der Abtriebswelle (50) des Motors (48) mit der zweiten Rotationsachse (A) des zweiten Körpers (20) zusammenfällt, und dass der Spanndorn ein mechanischer Spanndorn (42) ist, der ein angetriebenes Kegelzahnrad (54) aufweist, das dazu eingerichtet ist, in ein Kegelzahnrad (52) der Abtriebswelle (50) einzugreifen, um die Bewegung auf eine werkzeugtragende Werkzeugwelle (542) des Spanndorns (42) zu übertragen, und der Motor (48) in dem zweiten Abschnitt (20) vorgesehen ist.

2. Werkzeugmaschine (18) gemäß Anspruch 1, **dadurch gekennzeichnet, dass** die erste Rotationsachse (C) und die zweite Rotationsachse (A) aufeinander senkrecht stehen.

3. Werkzeugmaschine (18) gemäß Anspruch 2, **dadurch gekennzeichnet, dass** die Spanndornrotationsachse (M) senkrecht auf der zweite Rotationsachse (A) steht.

4. Werkzeugmaschine (18) gemäß Anspruch 1, **dadurch gekennzeichnet, dass** die erste Rotationsachse (C) um einen Winkel von oder im Bereich von 45° geneigt ist.

5. Werkzeugmaschine (18) gemäß Anspruch 4, **dadurch gekennzeichnet, dass** die Spanndornrotationsachse (M) um einen Winkel gleich oder im Bereich von 45° geneigt ist.

6. Werkzeugmaschine (18) gemäß dem vorhergehenden Anspruch, **dadurch gekennzeichnet, dass** das Kegelzahnrad (52) und das angetriebene Kegelzahnrad (54) geschliffene Schrägverzahnungen haben.

7. Werkzeugmaschine (18) gemäß Anspruch 1, **dadurch gekennzeichnet, dass** das angetriebene Kegelzahnrad (54) mit Mitteln zur Bewegungsübertragung auf das Werkzeug des Spanndorns verbunden ist, wobei diese Mittel eine angetriebene Welle (542) und ein Fixierungssystem (46) für das Werkzeug sind.

## Revendications

1. Machine-outil (18) comprenant un manchon (16) et une tête d'usinage (12), ladite tête d'usinage comprenant :
un premier corps (14) raccordé au manchon (16), afin de pouvoir tourner par rapport à ce dernier, autour d'un premier axe de rotation (C) ;
un second corps (20) raccordé audit premier corps (14), afin de pouvoir tourner par rapport à ce dernier, autour d'un second axe de rotation (A) qui est incliné par rapport au premier axe (C) ;
un mandrin (42) adapté pour monter un outil et adapté pour être fixé au second corps (20) au moyen de moyens de fixation (44) prévus sur le second corps (20) et sur le mandrin (42), ledit mandrin (42) définissant un axe de rotation (M) de mandrin pour l'outil ; et
un moteur (48) prévu avec un arbre de sortie (50) et adapté pour coopérer avec ledit mandrin (42) pour la rotation de l'outil autour de l'axe de rotation (M) de mandrin ;
ladite machine étant **caractérisée en ce que** l'axe de rotation dudit arbre de sortie (50) dudit moteur (48) coïncide avec le second axe de rotation (A) du second corps (20) et **en ce que** ledit mandrin est un mandrin mécanique (42) comprenant une roue conique entraînée (54) adaptée pour se mettre en prise avec une roue conique (52) de l'arbre de sortie (50) afin de transmettre le mouvement à un arbre d'outil de porte-outil (542) du mandrin (42), et le moteur (48) est prévu sur le second corps (20).

2. Machine-outil (18) selon la revendication 1, **caractérisée en ce que** ledit premier axe de rotation (C) et ledit second axe de rotation (A) sont perpendiculaires entre eux.

3. Machine-outil (18) selon la revendication 2, **caractérisée en ce que** l'axe de rotation (M) de mandrin est perpendiculaire au second axe de rotation (A).

4. Machine-outil (18) selon la revendication 1, **caractérisée en ce que** ledit premier axe de rotation (C) est incliné à un angle égal à ou dans la région de 45°.

5. Machine-outil (18) selon la revendication 4, **caractérisée en ce que** l'axe de rotation (M) de mandrin est incliné à un angle égal à ou dans la région de 45°.

6. Machine-outil (18) selon la revendication précédente, **caractérisée en ce que** la roue conique (52) et la roue conique entraînée (54) ont des dents hélicoïdales meulées.

7. Machine-outil (18) selon la revendication 1, **caractérisée en ce que** ladite roue conique entraînée (54) est raccordée aux moyens pour la transmission de mouvement à l'outil du mandrin, ces moyens étant un arbre entraîné (542) et un système de fixation (46) pour l'outil.
